# EUROPEAN PATENT SPECIFICATION

(11) **EP 0 396 190 B1**
(45) Date of publication and mention of the grant of the patent: **10.07.1996**
(21) Application number: 90201072.7
(22) Date of filing: 27.04.1990
(51) Int. Cl.: H04M 1/72, H04M 1/02

(54) **Telephone set with a detachable operation section**
Telefonapparat mit einem lösbaren Bedienungsteil
Poste téléphonique ayant une partie de commande détachable

(30) Priority: 02.05.1989 JP 51688/89
(43) Date of publication of application: 07.11.1990
(73) Proprietor: Philips Electronics N.V., 5621 BA Eindhoven (NL)
(72) Inventor: Sawada, Kenji, NL-5656 AA Eindhoven (NL)
(74) Representative: De Jongh, Cornelis Dominicus

(56) References cited:
- EP-A- 0 187 474
- EP-A- 0 272 715
- US-A- 4 153 822
- US-A- 4 803 724
- PATENT ABSTRACTS OF JAPAN vol. 5, no. 55 (E-52)(727) April 16, 1981 & JP-A-566544
- PATENT ABSTRACTS OF JAPAN vol. 10, no. 201 (E-419)(2257) July 15, 1986 & JP-A- 61 43 050

## Description

The invention relates to a telephone set comprising a handset section and an interface section provided with a detachable operation section having push buttons.

Such a telephone set is known from the Japanese Application No. 62-110252 (63-275248). The detachable operation section of this telephone set is provided with an infrared transmission part for transmitting information and the interface section is provided with an infrared receiving part for receiving the transmitted information. By using this detachable operation section, a telephone number can be dialled from a remote place.

It is a disadvantage of this known telephone set that a telephone conversation from a remote place is not possible: only the dialling of a telephone number can be done from a remote place.

It is an object of the invention to provide a cheap, handy telephone set for wireless communication, the telephone set having multifunctional possibilities.

The telephone set of the type described in the opening paragraph is characterized in that the telephone set is a cordless telephone set of which the interface section is a base unit and in that, the operation section is connectable to the handset section.

It is observed that a wireless telephone set comprising an interface section and a handset section is known. But at these known telephone sets either only one of the two mentioned sections has a dialling function (which is awkward), or both sections have each a dialling function (which is expensive).

With the detachable operation section being connectable to the wireless interface section and being connectable to the wireless handset section, a telephone number can be dialled from either the interface section or the handset section and a telephone conversation can be held from either the interface section or the handset section.

It is an advantage that, since the handset section is coupled wirelessly to the interface section, all telephone functions are present at a place chosen by the subscriber.

It is an additional advantage that only one operation section is needed for using either the interface section or the handset section.

An embodiment of the invention is characterized in that the interface section and the handset section each comprise a connection for connecting a cable between said connections.

When wireless communication is disabled by a fail of power of the handset section, the communication can be proceeded through the cable. It is also possible to recharge the handset section via the cable. In the event of wireless communication being disabled by a fail of power, communication can also be proceeded by connecting the operation section to the interface section and using this interface section for further phone calls.

A further embodiment of the invention is characterized in that the operation section is provided with at least one additional function such as an alarm, a memory, a timer and a recorder for absence.

By providing the operation section with additional functions (apart from the dialling function) the telephone set can easily be updated with new functions by replacing the operation section for an updated one. It is even possible to give users of the same telephone set an individual authorization by giving each user his own specific operation section with possibilities that depend on his authorization. It is also possible to give each user his own specific operation section that can be connected to different telephone sets.

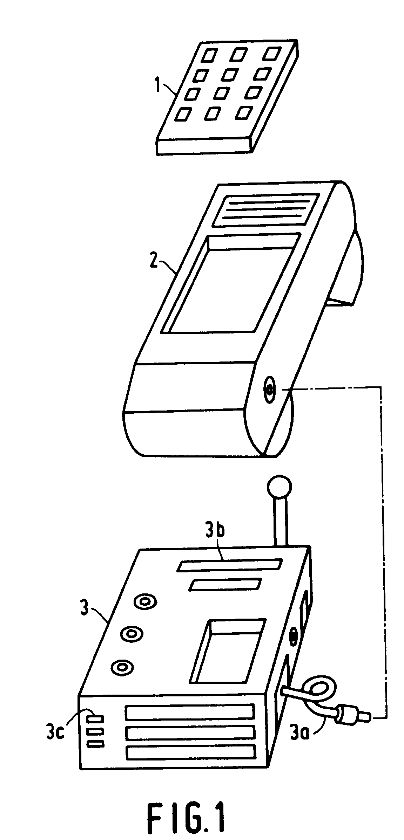

The invention will now be further explained with reference to the accompanying draining in which Figure 1 shows a telephone set according to the invention.

As shown in Figure 1, the telephone set according to the invention comprises an operation section 1 having a keyboard, a handset (transceiver) section 2 and an interface section 3.

When this telephone set is to be used as a wireless telephone, the operation section 1 is mounted in a rectangular recess formed in the back of the handset section 2 so that the keyboard is electrically connected to the handset section 2. At the same time, the interface section 3 is connected to the telephone line, and the power cord (not shown) thereof is connected to an external power supply (for example, to a receptacle of the commercial electric power). Thus, the interface section 3 receives electric power from the external power supply and can radio-communicate with the transceiver section 2 which is powered by a battery mounted therein.

When the commercial electric power fails or when the battery in the handset section 2 goes out, the plug 3a of the signal cable of the interface section 3 is inserted in the jack of the handset section 2. Upon insertion of the plug 3a, the supply of power to the radio section in the handset section 2 is stopped and the signal communication of the handset section 2 with the interface section 3 is performed through the signal cable. In this wire telephone mode, the operation section 1 may be mounted either on the handset section 2 or in a rectangular recess formed in the interface section 3.

This telephone set can also be used as a wire telephone without the connection of the signal cable. In this case, the operation section 1 should be mounted on the interface section 3, and a microphone 3c and a loudspeaker 3b provided in the interface section 3 are used for communication instead of the handset section 2.

The interface section 3 has therein a microprocessor for establishing various functions in response to manipulation of the operation section 1.

## Claims

1. Telephone set comprising a handset section (2) and an interface section (3) provided with a detachable operation section (1) having push buttons, characterized in that, the telephone set is a cordless telephone set of which the interface section (3) is a base unit and in that, the operation section (1) is connectable to the handset section (2).

2. Telephone set according to Claim 1, characterized in that the interface section (3) and the handset section (2) each comprise a connection for connecting a cable between said connections.

3. Telephone set according to Claim 1 or 2, characterized in that the operation section (1) is provided with at least one additional function such as an alarm, a memory, a timer and a recorder for absence.

## Patentansprüche

1. Telefonapparat mit einem Handapparatteil (2) und einem Interfaceteil (3) mit einem entfernbaren Bedienungsteil (1) mit Drucktasten, dadurch gekennzeichnet, daß der Apparat ein drahtloser Telefonapparat ist, dessen Interfaceteil (3) eine Basiseinheit ist und daß der Bedienungsteil (1) mit dem Handapparatteil (2) verbindbar ist.

2. Telefonapparat nach Anspruch 1, dadurch gekennzeichnet, daß der Interfaceteil (3) und der Handapparatteil (2) je einen Anschluß aufweisen zum Anschließen eines Kabels zwischen den Anschlüssen.

3. Telefonapparat nach Anspruch 1 oder 2, dadurch gekennzeichnet, daß der Bedienungsteil (1) mit wenigstens einer zusätzlichen Funktion versehen ist, wie einem Alarm, einem Speicher, einem Zeitgeber und einem Aufzeichnungsgerät bei Abwesenheit.

## Revendications

1. Poste téléphonique ayant une section de combiné (2) et une section d'interface (3), pourvues d'une section de commande détachable (1) présentant des boutons-poussoirs, caractérisé en ce que le poste téléphonique est un poste téléphonique sans cordon dont la section d'interface (3) est une unité de base et en ce que la section de commande (1) peut être connectée à la section de combiné (2).

2. Poste téléphonique selon la revendication 1, caractérisé en ce que la section d'interface (3) et la section de combiné (2) comprennent chacune une connexion pour connecter un câble entre lesdites connexions.

3. Poste téléphonique selon la revendication 1 ou 2, caractérisé en ce que la section de commande (1) est pourvue d'au moins une fonction supplémentaire telle qu'une fonction d'alarme, une mémoire, une minuterie et un répondeur automatique.
